(19) Europäisches Patentamt
European Patent Office
Office européen des brevets

(11) Publication number: 0 112 610
B1

(12) **EUROPEAN PATENT SPECIFICATION**

(45) Date of publication of patent specification: **15.04.87**

(21) Application number: **83305578.3**

(22) Date of filing: **21.09.83**

(51) Int. Cl.⁴: **A 01 N 25/34,** A 01 N 43/80, C 02 F 1/50, A 01 N 25/32, A 01 N 25/22

(54) **Protracted-release microbiocidal articles containing relatively high water solubility microbiocides.**

(30) Priority: **23.09.82 US 422056**
**31.01.83 US 462242**
**28.07.83 US 518237**

(43) Date of publication of application:
**04.07.84 Bulletin 84/27**

(45) Publication of the grant of the patent:
**15.04.87 Bulletin 87/16**

(84) Designated Contracting States:
**AT BE CH DE FR GB IT LI LU NL SE**

(56) References cited:
**GB-A-1 327 763**
**US-A-3 517 022**
**US-A-4 105 431**
**US-A-4 241 214**
**US-A-4 289 815**

(73) Proprietor: **Rohm and Haas Company**
**Independence Mall West**
**Philadelphia, Pennsylvania 19105 (US)**

(72) Inventor: **Amick, David Richard**
**110 Devon Road**
**Chalfont, Pa. 18914 (US)**

(74) Representative: **Angell, David Whilton et al**
**Rohm and Haas Company Patent Department**
**Chesterfield House Bloomsbury Way**
**London WC1A 2TP (GB)**

**EP 0 112 610 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is concerned with protracted release microbiocidal articles containing water-soluble isothiazolone microbiocides, their use in the control of microorganisms, in protracted release of isothiazolone microbiocide into aqueous systems and in safening isothiazolone microbiocidal compositions.

The microbiocidal articles with which the invention is concerned comprise microbiocidal composition sealed in a porous membrane. The microbiocidal composition comprises isothiazolone microbiocide, of which the microbiocidal 3-isothiazolones and 2-substituted-1,2-benzisothiazolones are of special interest. Isothiazolones have a tendency to cause skin irritation in man and to evolve nontoxic gases when in aqueous solution at concentrations convenient for shipping.

Isothiazolones are a class of chemical compounds known to possess excellent and useful microbiocidal properties and resistance to common additives and contaminants. Many 3-isothiazolones are disclosed in U.S. Patents 3,761,488; 3,849,430; 3,870,795; 4,067,878; 4,150,026; and 4,241,214. U.S. Patents 3,517,022, 3,065,123; and 3,761,489 disclose 2-substituted-1,2-benzisothiazolones. U.S. Patent 3,849,430 discloses a method for preparing the isothiazolones.

While the above-mentioned patents disclose the use of isothiazolones in a variety of microbiocidal end uses, such as, for example, those uses and formulations and compositions disclosed in U.S. Patent 3,761,488 at columns 15—19 and in the actual examples thereafter, isothiazolones are generally made available in combination with a liquid carrier such as water or in aqueous compositions. Column 19, line 66 *et seq.* discloses that isothiazolones can be taken up or mixed with a finely-divided particled solid carrier, as for example, clays, inorganic silicates, carbonates, silicas and organic carriers. Column 20, line 25 *et seq.* discloses that a convenient method for preparing a solid formulation is to impregnate the isothiazolone onto the solid carrier by means of a volatile solvent, such as acetone. However, these earlier attempts to produce solid formulations have resulted in formulations which tended to coalesce (or "cake") or to give extremely lightweight particles (or "dusts").

U.S. Patent 3,977,404 discloses an osmotic device for delivering an active agent to an external fluid present in the environment of use at a controlled and continuous rate comprised of a shaped wall, which is made in at least a part of a material permeable to an external fluid and substantially impermeable to active agents, surrounding at least part of a reservoir containing an active agent. The reservoir is formed of a microporous material permeable to the active agent and the external fluid. The micropores in the reservoir constitute a passageway for dispensing active agent from the reservoir to the external fluid in the environment of use wherein the external fluid is continuously imbibed through the wall into the reservoir in a tendency towards osmotic equilibrium at a rate determined by the permeability of the wall and the osmotic pressure gradient across the wall to continuously dissolve active agent to provide a substantially saturated solution of active agent which is delivered through the passageway from the device. The material for fabricating the wall is selected from materials which can be substantially insoluble in fluids or which can bioerode after a period of time taking place at the end of the active agent release period. Examplary suitable wall materials include cellulose acetate and similar cellulose esters and cellulose ethers, hydroxylated ethylene-vinyl acetate; perm-selective aromatic nitrogen containing polymeric membranes that exhibit water permeability and essentially no solute permeability, semi-permeable membranes made from polymeric oxides; and the like. Suitable microporous material to produce the reservoir include polymeric materials such as polycarbonates, poly(vinyl chloride), polyamides, polysulfones, crosslinked olefin polymers, and hydrophobic or hydrophilic microporous homo-, co- and interpolymers. The examples teach only reservoirs produced from polymeric materials. Exemplary active agents include, for example, pesticides, herbicides, germicides, biocides, algicides, insecticides, anti-oxidants, plant growth promoters and inhibitors, disinfectants, catalysts, chemical reactants, nutrients, cosmetics, drugs, sex sterilants, air purifiers, and other agents which benefit the environment of use.

The devices of the patent are made by standard techniques. For example, one suitable technique is to form the reservoir by blending a polymeric powder with an active agent in crystalline or granular form and then applying pressure to convert the blend into a solid having agent embedded therein followed by applying the wall by spraying, dipping, casting, coating, solvent evaporation, moulding, or pressing the wall-forming material to the reservoir. The opening in the wall can be formed by covering a part of the wall with tape that is removed after the wall is coated onto the reservoir, by cutting away a part of the wall, or by punching an opening in the wall to connect a microporous path of the reservoir with the exterior of the device.

U.S. Patent 4,011,172 discloses articles designed to bleach fabrics in an automatic dryer comprising chlorine bleaching compounds dissolved in water or other suitable solvent thickened by the addition of particulate thickening agent, for example, silicate materials, water-swellable and water-soluble polyacrylamides and cellulose derivatives, and synthetic clays, the thickened bleaching compounds being contained in a perforated pouch made of plastic material until use, at which time the total contents of the pouch will be disseminated. The pouch comprises a flexible, embossed, water-insoluble plastic sheeting made by folding the embossed sheet into the pouch-like configuration and sealing, for example, heat-sealing, the edges, leaving an opening along one edge. After adding the bleaching composition to the pouch through the opening, the opening is then sealed. The resulting pouch is stretched immediately prior

to use to cause pores or perforations along the embossing lines. Suitably embossed plastic sheets for preparing the pouch receptacle include sheets of, for example, polyethylene, polypropylene, and the like, and are available from Hercules as INSTANTNET and DELNET brand. When ruptured along the embossed pattern lines, such sheets form pores or perforations in the size range of 0.05 mm.—3 mm. Alternatively, water-insoluble plastic pouches having perforations in the size range of about 0.05 mm.—3 mm. can be used. Such pouches can be covered and sealed with plastic film which is removed at the time of use.

U.S. Patent 4,170,565 discloses a substrate article for cleaning fabrics, particularly in an automatic washer, consisting essentially of an effective amount of a surface-active compositon of about 5—95% by weight of a water-soluble surface-active agent contained between two layers of a water-insoluble, wet-strength substrate, at least one of said layers having an air permeability of at least about 0.28 $m^3$ (10 $ft^3$) of air per minute per 0.09 $m^2$ ($ft^2$) of substrate. The perimeter of the two sheets are sealed together, such as by adhesive, sewing, or heat sealing. Preferred substrates include flexible water-insoluble, wet-strength paper, woven cloth, and non-woven cloth substrates, cellulose ester being mentioned among a list of synthetic fibers suitable for making non-woven cloths.

U.S. Patent 4,289,815 discloses a pouch for the controlled release of active ingredients into an aqueous medium comprising liquid or solid active ingredients enclosed in a sealed envelope of cold-water insoluble polyvinyl alcohol. The object of the invention described in the patent is to provide pouches for delivery of active ingredients which provide a substantially uniform, controlled "zero-order" release of the active ingredients. This objective is achieved by utilizing cold-water insoluble, gas-impermeable polyvinyl alcohol as the polymeric film for preparing the pouches. The patent further discloses that a wide variety of liquid and solid active ingredients are applicable for use in the pouches, examples of which active ingredients include detergents, bleaches, chlorinating agents, pesticides, bactericides, dyes, drugs, and other chemicals. At column 3, lines 53 *et seq.*, the patent teaches that "in order to establish practical release rates, it is required that the active ingredient exhibit a minimum water solubility" and that the water solubility can range from small water solubility to total water solubility. The patent also teaches that the applicable areas of use include introduction of active ingredients into toilet tanks, urinals, swimming pools, and water towers.

Isothiazolones are commonly provided in commerce in aqueous solution, usually with inorganic, alkaline earth metal salts as stabilizers to prevent reactions which render them inactive against microorganisms. Although solid alkaline earth metal salt complexes of isothiazolones are known (U.S. Patents 4,150,026 and 4,241,214 mentioned above), these salt complexes suffer the disadvantage that they badly corrode processing equipment used to remove water in the course of producing the solid dry salt complex product, and the final solid salt complex product tends to be extremely dusty and thereby toxic to one during handling the product.

A typical, useful commercially available 3-isothiazolone product is a metal salt-stabilized aqueous solution of 5-chloro-2-methyl-3-isothiazolone and 2-methyl-3-isothiazolone (3:1) containing 14% active ingredient and $Mg(NO_3)_2$ plus $MgCl_2$ as stabilizers. Such commercial products suffer the disadvantages of being irritating to the skin when spilled during handling and evolving nontoxic gases which build up pressure in a sealed container provided for shipping and transportation.

This invention can be used to provide an improved microbiocidal article for delivery of water-soluble isothiazolone microbiocides to aqueous systems wherein said article has reduced, if any at all, tendency for a water-soluble isothiazolone microbiocide to accumulate on the external surface thereof, especially over a period of time approximating to a shipping and storage period.

GB—A—1,327,763 discloses a dispenser for use in the chemical treatment of a liquid, comprising a container having an external wall of liquid permeable material all the pores of which are less than 0.3 mm, the container containing a solid treatment chemical comprising a halogen donor and allowing protracted release of this chemical into the liquid. However, the patent does not acknowledge the above-mentioned tendency for chemicals to leach onto the external surface of an article containing that chemical, and consequently does not suggest how such a tendency can be overcome.

We have now found that a porous (or perforated) membrane, of hydrophobic film-forming material, wherein the pores (or perforations) are smaller than the particle size of solid, particulate microbiocidal composition sealed therein, which composition comprises inert, finely-divided water-insoluble solid carrier material admixed with a water-soluble isothiazolone microbiocide, usually in aqueous solution, can be used to make the microbiocide effectively available in aqueous media without allowing the carrier material to pass through the pores and while combatting to a surprising degree any tendency for the isothiazolone microbiocide to migrate through the membrane material and accumulate on the external surface of the membrane. The production of microbiocidal articles useful for storing, handling, transporting, and delivering an isothiazolone microbiocide to an aqueous system is thereby enabled. An especially suitable microbiocidal article comprises the isothiazolone microbiocide in solid form contained in a bag, or packet, of the membrane.

One aspect of this invention is, therefore, a method for safening the handling of isothiazolone microbiocides. Another is the control of microorganisms in aqueous media and yet another is the protracted release of isothiazolone microbiocide into aqueous media. The articles of the invention however comprise

(a) a particulate solid microbiocidal composition comprising:

(i) 0.1 to 70 weight %, based on total weight of said composition, of water-soluble isothiazolone microbiocide having a room temperature (25°C) water solubility greater than 1000 ppm, blended with an absorbed into;

(ii) 99.9 to 30 weight %, based on total weight of said composition, of inert, finely-divided water-insoluble solid carrier material; sealed in

(b) a porous membrane of hydrophobic film forming material having a thickness of $1.27 \times 10^{-5}$m (0.5 mil) to $25.4 \times 10^{-5}$m (10 mils), a solubility parameter less than 12.5 and a pore size smaller than the effective particle size of the solid microbiocidal composition, e.g. a pore size of $15.24 \times 10^{-5}$m or less, preferably about $12.7 \times 10^{-5}$m. The preferred pore diameter of the membrane is equal to or less than $15.24 \times 10^{-5}$m (6 mil) and more especially those having a pore diameter of about $12.7 \times 10^{-5}$m (5 mil).

Suitable hydrophobic, film-forming materials are polyesters, polyfluoroolefins, polyamides (Nylons), polyvinyl chloride, polyethylene, polypropylene, spunbonded polyethylene, spunbonded polypropylene, polyethylene terephthalate, or polycarbonate.

Isothiazolone microbiocides which have high water solubility, preferably are absorbed into the inert, finely-divided, water-insoluble solid carrier material from aqueous solutions, in which form the isothiazolones are ordinarily obtained from conventional production processes. When it is desirable to package the particulate, solid microbiocidal isothiazolone composition of the aqueous solution of the isothiazolone absorbed into the solid carrier material, the film-forming membrane material used to envelope the composition to form the article or packet must possess the characteristic that the water of absorption containing dissolved isothiazolone will not migrate from the interior of the article through the membrane material to the external surface of the article so as to result in an accumulation of the isothiazolone on the external surface of the article. A hydrophobic material is best suited for preventing aqueous solutions containing isothiazolones which may leach-out from the composition to migrate from the interior of the article to the external surface. However, continuous films of hydrophobic materials used as the membrane for the article will permit only small amounts of aqueous solutions containing isothiazolones to migrate from the interior to the exterior surface of the article and permit only small amounts of external water to migrate from the external environment of use of the article into the interior of the article. Thus, such continuous films of hydrophobic material permit the release of only small amounts of the microbiocidal isothiazolones from the composition to the external aqueous system which constitutes the environment of use. Although continuous films of hydrophobic material are useful to produce articles which will provide protracted release of small amounts of isothiazolones to effect low concentrations thereof in the environment of use, such films are not suitable to effect higher concentrations of isothiazolones in the environment of use.

This problem is overcome by the use, for the article membrane, of a porous, including perforated, film or sheet produced from hydrophobic film-forming material. The pores, or perforations, may be effected by punching holes in the film or sheet, or by a method of manufacture of the film or sheet which will impart pores or perforations to the film or sheet, for example, weaving or spunbonding manufacturing methods. The only limitation concerning the pore size is that it be sufficiently smaller than the particle size of the particulate, solid microbiocidal isothiazolone composition so as to not permit the composition to pass from the interior of the article through the pores to the external environment of use. Pore sizes in the range of from $10.16 \times 10^{-5}$m to $17.78 \times 10^{-5}$m (4 to 7 mils) are generally preferred.

The surprising property of the article of the invention is that when the article is used in an aqueous system, water freely migrates through the membrane pores into the interior of the article and dissolves the water-soluble microbiocides from the composition and migrates as an aqueous microbiocide solution back into the aqueous system. This converts the initial aqueous system into a solution containing microbiocidally-effective amounts of biocides released from the article. This same article, when dry prior to use, does not permit migration of the absorbed aqueous solution of the microbiocide from the interior of the article to accumulate on the external surface of the article even over a period of time which approximates shipping or transporting and storage time under normal room conditions of relative humidity and temperature, notwithstanding the presence of water of absorption in the composition and the pores in the enveloping membrane or packet material.

It will be apparent to those having ordinary skill in the pertinent art that the porous membrane of hydrophobic material is also useful to produce articles according to this invention wherein the particulate, solid microbiocidal isothiazolone composition is produced from solutions of the water-soluble isothiazolone component dissolved in water or in a volatile organic solvent absorbed onto the carrier material followed by removal, by conventional means of evaporation, of the water or the volatile organic solvent before the composition is enveloped or sealed in the porous membrane or packet material. In this embodiment, this invention is also advantageous in that the use of the porous film of hydrophobic material prohibits the accumulation of the isothiazolone component in aqueous solution on the external surface of the article wherein the water provided by the storage environment, that is, humid air, is permitted to migrate from the external storage environment through the porous membrane into the interior of the article, but no resulting aqueous isothiazolone solution formed in the interior of the article is permitted to migrate back through the membrane to the external surface of the article.

Thus, the article according to this invention can provide a still safer form of water-soluble isothiazolone biocides, useful in aqueous systems, which form is characterised by reduced risk of contact of the biocide, in aqueous solution with the skin.

Desirable ranges of hydrophobicity of film-forming material useful for producing the article membrane are set forth below:

| Desirability | Article Membrane Material | Solubility Parameter |
|---|---|---|
| Poor | | >12.5 |
| | eg, polyvinyl alcohol, cellulose | 12.6<br>15.6 |
| Preferred | | 10—12.5 |
| | eg, polyamide, polyvinyl chloride | 12<br>12.2 |
| More Preferred | | 8—10 |
| | eg, polyethylene terephthalate, polycarbonate | 9.5<br>9.5 |
| Most Preferred | | <8 |
| | eg, polyethylene, polypropylene | 7.8<br>7.8 |

Preferably, in the particulate, solid microbiocidal isothiazolone composition used according to the invention, the water-soluble microbiocidally-effective isothiazolone

(i), having a room temperature (25°C) water solubility of greater than 1000 ppm, comprises isothiazolone of the formula

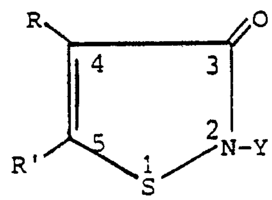

(I)

wherein

Y is an unsubstituted or substituted $C_1$—$C_{18}$ alkyl group, an unsubstituted or substituted $C_2$—$C_{18}$ alkenyl (e.g. haloalkenyl) or alkynyl (e.g. haloalkynyl) group, an unsubstituted or substituted $C_3$—$C_{12}$ cycloalkyl group, an unsubstituted or substituted aralkyl group of 6—10 carbon atoms, or an unsubstituted or substituted aryl group of 6—10 carbon atoms;

R is hydrogen, halogen or a $C_1$—$C_4$ alkyl group;

R' is hydrogen, halogen or a $C_1$—$C_4$ alkyl group, or

R and R' can be taken together with the C=C bond of the isothiazolone ring to form a benzene ring;

or said isothiazolone(s) stabilized with at least one metal salt in an amount of 1—60 weight % based on weight of isothiazolone and metal salt, said metal salt(s) being represented by the formula:

$$(MX_n)$$

wherein

M is a cation of sodium, potassium, calcium, magnesium, copper, iron, zinc, barium, manganese, silver, cobalt and/or nickel;

X is chloride, bromide, iodide, sulfate, nitrate, nitrite, acetate, chlorate, perchlorate, bisulfate, bicarbonate, oxalate, maleate, p-toluene-sulfonate, carbonate, and/or phosphate; and

n is an integer for which the anion X satisfies the valence of the cation M; and

said solid carrier material (ii) comprises inert, finely-divided water-insoluble solid material selected from silicaceous diatomaceous earth, high water absorption capacity calcium silicate granular material, silicas, charcoal, clays, vermiculite, corn cobs, high purity silica (e.g. Aerosil and Sipernet), wood (sawdust), polymeric matrices, such as ion exchange resin beads.

It is to be understood that, as the number of carbon atoms in the substituent group "Y" increases, and as halogens are substituted on the isothiazolone ring, water-solubility decreases.

By a "substituted alkyl group" is meant an alkyl group having one or more of its hydrogens replaced by another substituent group. Examples of the substituted alkyl groups which characterize the isothiazolones of formula I preferably used in this invention include hydroxyalkyl, haloalkyl, cyanoalkyl, alkylamino, dialkylamino, arylaminoalkyl, carboxyalkyl, alkoxycarbonylalkyl, alkoxyalkyl, aryloxyalkyl, alkylthioalkyl, arylthioalkyl, haloalkoxyalkyl, cycloaminoalkyl such as morpholinylalkyl and piperidinylalkyl and pyrrolodinylalkyl, carbamoyloxyalkyl and isothiazolonylalkyl.

By a "substituted aralkyl group" is meant an aralkyl group having one or more of the hydrogens on either the aryl ring or the alkyl chain replaced by another substituent group. Examples of the substituted aralkyl group which characterize the isothiazolones of formula I preferably used in this invention include halo, lower alkyl and lower alkoxy.

By a "substituted aryl group" and "substituted benzene ring" is meant an aryl group and benzene ring, respectively, such as phenyl, naphthyl, or pyridyl groups, having one or more of the hydrogens on the aryl ring replaced by another substituent group. Examples of such substituent groups include halo, nitro, lower alkyl, lower alkoxy, lower alkyl- and acylamino, lower alkoxycarbonyl and sulfonyl.

By the expression "water-soluble" as applied to the isothiazolones used in this invention is meant an isothiazolone or combination of isothiazolones characterized by having a water solubility greater than 1000 ppm (0.1%) at room temperature (25°C). Especially preferably, the isothiazolone or combination thereof is characterized by having a room temperature water solubility greater than 50,000 ppm. An example of a suitable highly water-soluble combination of isothiazolones is the commercially available 3-isothiazolone product, 5-chloro-2-methyl-3-isothiazolone and 2-methyl-3-isothiazolone in a weight ratio of 3:1 with 15 weight % $Mg(NO_3)_2$ and 9 weight % of $MgCl_2$, whose water solubility is about 150,000 ppm. The isothiazolone may have a water solubility even approaching infinite solubility.

By the expression "microbiocidal compound" is meant those compounds effective to control those microorganisms especially of the group of bacteria, fungi (including molds and yeasts), and algae. In the method of the invention for controlling living microorganisms, by the expression "microorganisms" is meant bacteria, fungi (including molds and yeasts), and algae.

When used alone, the expression "isothiazolone(s)" is meant to include the "free" isothiazolone(s) and the metal salt complexes of the free isothiazolone(s).

More preferably in the methods and articles of the invention, the particulate, solid, microbiocidal isothiazolone composition comprises (i) 1 to 35 weight %, based on total weight of said composition, of said water-soluble isothiazolone of formula I wherein

Y is an unsubstituted or substituted $C_1$—$C_{18}$ alkyl group or $C_3$—$C_{12}$ cycloalkyl group;

R is hydrogen or halogen;

R' is hydrogen or halogen; or

R and R' are taken together with the C=C bond of the isothiazolone ring to form a benzene ring;

or said isothiazolone stabilized with said metal salt; and (ii) 99 to 65 weight %, based on total weight of said composition, of a solid carrier material selected from silicaceous diatomaceous earth, high water absorption capacity calcium silicate granular material, silicas and clays.

Most preferably in the methods and article of the invention, the particulate, solid, microbiocidal isothiazolone composition comprises (i) 2 to 25 weight %, based on total weight of said composition, of said water-soluble isothazolone of formula I wherein Y is methyl, R is hydrogen and R' is chlorine; or of a mixture of said isothiazolones in aqueous solution wherein Y is methyl, R is hydrogen and R' is chlorine and Y is methyl, R is hydrogen and R' is hydrogen; or said isothiazolone(s) stabilized with said metal salt wherein said metal salt is $Mg(NO_3)_2$ or a mixture of $Mg(NO_3)_2$ and $MgCl_2$; and (ii) 98 to 75 weight %, based on total weight of said composition, of silicaceous diatomaceous earth.

By way of example, there may be used in combination with the above-defined 3-isothiazolone commercial product, an isothiazolone of formula I having a water-solubility of about 500 ppm wherein Y is *n*-octyl or *t*-octyl and R and R' are both hydrogen, providing, of course, that the water solubility of the combination is greater than 1000 ppm.

In one embodiment of the invention the microbiocidal composition also comprises, isothiazolone having a room temperature water solubility less than 1000 ppm, especially the isothiazolone of formula I having a solubility of about 500 ppm and wherein Y is *n*-octyl or *t*-octyl and R and R' are each hydrogen, stabilized with $Mg(NO_3)_2$ or a mixture of $Mg(NO_3)_2$ and $MgCl_2$, the total isothiazolone comprising from 2 to 25 weight %, based on total weight of the composition, and the combination of isothiazolones having a room temperature water solubility of more than 1000 ppm; and from about 98 to 75 weight %, based on total weight of said composition, of silicaceous diatomaceous earth. In this embodiment the isothiazolone mixture may contain isothiazolone of formula I wherein Y is methyl, R is hydrogen and R' is chlorine and isothiazolone of formula I wherein Y is methyl, R is hydrogen and R' is hydrogen.

The preparation and properties of representative isothiazolones are described in U.S. Patents 3,517,022; 3,761,488; and 3,065,123. U.S. Patent 3,849,430 further discloses a process for the preparation of representative isothiazolones. U.S. Patents 3,870,795 and 4,067,878 describe metal salt stabilized solution of 3-isothiazolones which are useful according to this invention. Additional isothiazolones which are useful according to the invention are those disclosed in U.S. Patent 4,310,590.

Preferably, the finely-divided, water-insoluble solid carrier material is selected from silicaceous diatomaceous earth, high water absorption capacity calcium silicate material, silicas, clays, and polymeric matrices.

Suitable silicaceous diatomaceous earth material is described in the Johns-Manville Corporation Technical Bulletin FF—160A, 10—80 concerning Celite Diatomite Filter Aids and Natural, Calcined, and Flux-Calcined Grades thereof. Suitable high water absorption capacity calcium silicate material is commercially available under the trademark "Micro-Cel" from the Johns-Manville Corporation. Typical as polymeric matrices useful as carrier material are adsorbents and ion exchange resins, such as, for example, Amberlite XAD—4 (a styrene/divinylbenzene polymeric adsorbent resin); Amberlite XAD—7 and Amberlite XAD—8 (acrylic absorbent resins); Amberlite 200 (a sulfonated styrene/divinylbenzene ion exchange resin); Amberlite IRA—900 (a styrene/divinylbenzene strong base ion exchange resin), and Amberlite IRC—50 (a weak acid ion exchange resin).

Especially preferred is a diatomaceous earth material commercially available as Celite 545 (Johns-Manville Corporation).

Of course, conventional adjuvants and additives used in microbiocidal compositions and formulations may be incorporated into the solid microbiocidal composition for example by first dissolving them in the aqueous or inert organic solvent solution of the isothiazolone(s) and then blending the solution with the solid carrier material. One useful additive for use in the solid microbiocidal composition according to the invention is a dye which would impart a readily visible colour to the solid composition. Thus, whenever, as a result of the accidental rupture of the article according to the invention, any solid microbiocidal composition would accidentally be spilled onto the skin during handling, the spilled composition could readily be observed and removed before the toxicant could leach out of the solid and cause skin burns. This is in contrast to the case involving accidental spillage of the aqueous microbiocidal solution of the isothiazolone when handling in association with an aqueous system, in which case it would be difficult to distinguish between harmless aqueous system and toxic isothiazolone concentrate. Other useful adjuvants and additives include chelating agents, surfactants, dispersants and buffers.

Alternatively, other conventional adjuvants and additives used with the isothiazolones which are used according to this invention may be combined with the microbiocidal composition in the sealed membrane independent of incorporation into the microbiocidal composition.

The article of the invention may be used advantageously in metal-working fluids, swimming pools, water towers such as water cooling towers, toilet bowl water, washing machine water.

For use in metal-working fluids, swimming pools, water towers, such as water cooling towers, toilet bowl water and washing machine water, the article of the invention can conveniently be removed from its shipping container, placed into the aqueous system to be treated, and, when the microbiocidal compound has completely leached-out of the article, the sealed membrane containing the solid carrier material can be safely removed by conventional techniques, for example, by hand, using tongs to dip the sealed membrane from the aqueous system.

The following Examples illustrate some embodiments of the invention. All parts and percentages therein are by weight unless otherwise indicated and all temperatures are in degrees Centigrade unless otherwise indicated.

## Example 1

To 75 g. of Celite 545 in a glass bottle was added 75 g. of 5-chloro-2-methyl-3-isothiazolone blended with 2-methyl-3-isothiazolone in a weight ratio of 3:1 (approx) with 15 weight % $Mg(NO_3)_2$ and 9 weight % of $MgCl_2$ in aqueous solution containing 14% active ingredient. The mixture was then stirring by hand with a spatula until it appeared to be uniformly mixed and free-flowing. No drying by heating was required or desired. The resulting solid product contained one-half of the initial amount of active ingredient ("AI") per unit weight of product, that is, the solid composition contained 7 weight % of active ingredient. The resulting solid microbiocidal composition was stored in a sealed bottle for several days at room temperature. Thereafter, when the stopper was removed, there was observed no gas emission due to pressure build-up.

1.6 g. of the resulting solid microbiocidal composition was added to 1000 ml. of water to give 1001.6 g. total weight of water and solid microbiocidal composition. Analysis of the supernatant water by ultraviolet spectroscopy indicated that all of the microbiocide was released into the water within 5 minutes.

## Example 2

A solid microbiocidal composition containing 20 weight % of active ingredient was prepared by dissolving 2.66 g. of crystalline 5-chloro-2-methyl-3-isothiazolone in 15 ml. of methanol. To this solution there was added 0.6 g. of $Mg(NO_3)_2 . 6 H_2O$. The resulting solution was added to 10 g. of Celite 545 in a 0.12 l (4 fl oz) bottle and the mixture was stirred by hand using a spatula until it appeared to be uniformly mixed and free-flowing. Methanol was removed by air-drying (or by heating the mixture under reduced pressure), and a uniform, free-flowing particulate solid was obtained. The solid was stored in a sealed bottle for several days at room temperature and thereafter, when the stopper was removed, there was observed no gas emission due to pressure build-up resulting from gas evolution from the solid composition. Upon adding the solid composition to water, all of the isothiazolone was released within 10 minutes.

## Example 3

This example illustrates the property of the solid microbiocidal composition whereby the solid composition tends not to evolve gasses to the extent that the known aqueous solutions of 3-isothiazolones evolve gasses even after heat treatment to eliminate volatile components.

The solid compositions were prepared as follows:

Water was partially removed from Kathon 886 aqueous concentrate under reduced pressure [(65°C 53.3 mbar (40 mm Hg)], and solid carrier material (Celite 545, available from Johns-Manville Corporation; Attaclay X—250, available from the Minerals and Chemicals Corporation of America, Attapulgus Clay Products, HiSil T—600, available from Pittsburgh Plate and Glass Company; or mixtures thereof) was added to the residue to obtain a flowable solid composition.

The table below describes the formulation and properties of representative compositions.

SOLID FORMULATIONS FROM A 3:1 (approx) WEIGHT MIXTURE OF 5-CHLORO-2-METHYL-3-ISOTHIAZOLONE and 2-METHYL-ISOTHIAZOLONE, 14% ACTIVE INGREDIENT IN AQUEOUS SOLUTION, WITH 15% $Mg(NO_3)_2$ and 7% $MgCl_2$ LIQUID CONCENTRATE

| Components of the Formulations | % Active Ingred. (by GLC) | | |
|---|---|---|---|
| Form Number | 3A | 3B | 3C[6] |
| % AI[2] | 14.1 | 14.07 | 14.0 |
| % Mg $(NO_3)_2$ $6H_2O$ | 25.9 | 25.9 | 25.9 |
| % $MgCl_2$ $6H_2O$ | 19.2 | 19.2 | 19.2 |
| % "Free" $H_2O$ | 1.3 | 0.1 | 40.9 |
| % Celite 545[3] | 29.3 | — | — |
| % Attaclay[4] X—250 | — | 29.9 | — |
| % HiSil[5] T—600 | 10.2 | 10.8 | — |
| Gauge Pressure at 250°C after 15 hrs at 93°C | | | |
| $N/m^2 \times 10^{-3}$ | 17.8 | 9.6 | 82.2—89 |
| (psi) | (2.6) | (1.4) | (12—13) |
| Before Gassing Test | 13.6 | 11.4 | 14 |
| Control | 11.5 | 10.7 | 13.8 |

[3]Celite 545 available from the Johns-Manville Corporation.
[4]Attaclay X—250 available from the Attapulgus Clay Company.
[5]HiSil T—600 available from the Pittsburgh Plate and Glass Company.

Example 4

There was sealed in bags, or packets or pouches, of the representative porous films, each packet having 129 $cm^2$ (20 $in^2$) of surface area [64.5 $cm^2$ (10 $in^2$) on each side], 28.6 gm. of the solid isothiazolone composition produced according to Example 1. The packets are heat-aged three days at 50°C, and one 64.5 $cm^2$ (10 $in^2$) surface of each packet is wiped with a water-dampened tissue to remove any AI residing on the packet's surface. The AI is then extracted from the tissue by 100 ml. of dionized water, and the amount of AI present in the water is determined by ultraviolet spectroscopy by comparing the absorbance at 273 nm with that of a standard solution. The results are as follows:

| | |
|---|---|
| TYVEK 1621* | 0.00015 $mg/cm^2$ (0.001 $mg/in^2$) |
| TYVEK 1622E* | 0.00062 $mg/cm^2$ (0.004 $mg/in^2$) |
| Cellophane** | 0.016 $mg/cm^2$ (0.105 $mg/in^2$) |

* Spunbonded and perforated polyethylene from Dupont.
**Clear film (unperforated) from Olin, #126 PUT—76.

The following words are trademarks which may or may not be registered in some or all of the designated states:

| | |
|---|---|
| Kathon; | Amberlite; |
| Celite; | Attaclay; |
| Micro-Cel; | Hi-Sil; |
| Aerosil; | Tyvek; |
| Sipernet; | Cellophane. |

Solubility parameters are measured by the method of "Polymer Handbook", Brandrup and Immergut, pages IV—344—345, Interscience Publishers 1966.

**Claims**

1. A microbiocidal article comprising:

(a) a particulate solid microbiocidal composition comprising:

(i) 0.1 to 70 weight %, based on total weight of said composition, of water-soluble isothiazolone microbiocide having a room temperature (25°C) water solubility greater than 1000 ppm, blended with and absorbed into;

(ii) 99.9 to 30 weight %, based on total weight of said composition, of inert, finely-divided water-insoluble solid carrier material; sealed in

(b) a porous membrane of hydrophobic film forming material having a thickness of $1.27 \times 10^{-5}$m (0.5 mil) to $25.4 \times 10^{-5}$m (10 mils), a solubility parameter less than 12.5 and a pore size smaller than the effective particle size of the solid microbiocidal composition.

2. An article according to claim 1 wherein the membrane comprises polyester, poly(fluoroolefin), polyamides, vinyl chloride polymer, ethylene polymer, propylene polymer, spunbonded poly(ethylene), spunbonded poly(propylene), poly(ethylene terephthalate), or polycarbonate.

3. An article according to claim 1 or claim 2 wherein the solid carrier material comprises silicaceous diatomaceous earth, high water absorption capacity calcium silicate granular material, silica, clay, charcoal, vermiculite, corn cobs, high purity silica, wood and/or polymeric matrix.

4. An article according to any preceding claim wherein the isothiazolone microbiocide having a room temperature water solubility of greater than 1000 ppm comprises microbiocidally-effective isothiazolone of the formula:

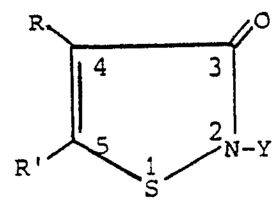

(I)

wherein

Y is an unsubstituted or substituted $C_1$—$C_{18}$ alkyl group, an unsubstituted or substituted $C_2$—$C_{18}$ alkenyl or alkynyl group, an unsubstituted or substituted $C_3$—$C_{12}$ cycloalkyl group, an unsubstituted or substituted aralkyl group of 6—10 carbon atoms, or an unsubstituted or substituted aryl group of 6—10 carbon atoms;

R is hydrogen, halogen or a $C_1$—$C_4$ alkyl group;

R′ is hydrogen, halogen or a $C_1$—$C_4$ alkyl group; or

R and R′ can be taken together with the C=C bond of the isothiazolone ring to form a substituted or unsubstituted benzene ring;

or said isothiazolone stabilized with metal salt in an amount of 1—60 weight % based on weight of 3-isothiazolone and metal salt, said metal salt being represented by the formula:

$$(MX_n)$$

wherein

M is sodium, potassium, calcium, magnesium, copper, iron, zinc, barium, manganese, silver, cobalt and/or nickel;

X is chloride, bromide, iodide, sulfate, nitrate, nitrite, acetate, chlorate, perchlorate, bisulfate, bicarbonate, oxalate, maleate, p-toluene-sulfonate, carbonate, and/or phosphate; and

n is an integer for which the anion X satisfies the valence of the cation M.

5. An article according to claim 4 wherein the microbiocidal composition comprises from 1 to 35 weight %, based on total weight of composition, of isothiazolone of formula I wherein Y is an unsubstituted or substituted $C_1$—$C_{18}$ alkyl group or $C_3$—$C_{12}$ cycloalkyl group;

R is hydrogen or halogen;

R′ is hydrogen or halogen; or

R and R′ are taken together with the C=C bond of the 3-isothiazolone ring to form a substituted or unsubstituted benzene ring; such isothiazolone stabilized with metal salt(s); and from 99 to 65 weight %, based on total weight of composition, of silicaceous diatomaceous earth, high water absorption capacity calcium silicate granular material, silica(s), and/or clay(s) as the solid carrier material.

6. An article according to claim 4 or 5 wherein the microbiocidal composition comprises from 2 to 25 weight %, based on total weight of composition, of isothiazolone of formula I wherein Y is methyl, R is hydrogen, and R′ is chlorine, such isothiazolone stabilized with $Mg(NO_3)_2$ or a mixture of $Mg(NO_3)_2$ and $MgCl_2$; and from 98 to 75 weight %, based on total weight of said isothiazolone, of silicaceous diatomaceous earth.

7. An article according to any of claims 4 to 6 wherein the microbiocidal composition also comprises, isothiazolone having a room temperature water solubility less than 1000 ppm, especially the isothiazolone of formula I having a solubility of about 500 ppm and wherein Y is *n*-octyl or *t*-octyl and R and R′ are each hydrogen, stabilized with $Mg(NO_3)_2$ or a mixture of $Mg(NO_3)_2$ and $MgCl_2$, the total isothiazolone comprising from 2 to 25 weight %, based on total weight of the composition, and the combination of isothiazolones having a room temperature water solubility of more than 1000 ppm; and from about 98 to 75 weight %, based on total weight of said composition, of silicaceous diatomaceous earth.

8. An article according to claim 7 wherein the isothiazolone mixture contains isothiazolone of formula I wherein Y is methyl, R is hydrogen and R′ is chlorine and isothiazolone of formula I wherein Y is methyl, R is hydrogen and R′ is hydrogen.

9. An article according to any preceding claim wherein the microbiocide is present in the composition in aqueous solution.

10. An article as claimed in any preceding claim wherein the pore size of the membrane is $15.24 \times 10^{-5}$m or less, especially in the case of claim 7, preferably about $12.7 \times 10^{-5}$m especially in the case of claim 8.

11. A method of safening an isothiazolone microbiocide which comprises incorporating the microbiocide into an article as claimed in any preceding claim.

12. A method for controlling living microorganisms in an aqueous system which comprises incorporating into the aqueous system an article according to any of claims 1 to 10.

13. A method for effecting protracted release of microbiocide into an aqueous system which comprises preparing an article as claimed in any of claims 1 to 10, introducing said article into said aqueous system and allowing the aqueous system to diffuse through the membrane.

14. A method according to claim 12 or 13 wherein the aqueous system is a metal-working fluid, the contents of a water cooling tower, of a toilet bowl or cistern, of a swimming pool or of a washing machine.

**Patentansprüche**

1. Mikrobiozider Gegenstand aus

(a) einem in Form von Einzelteilchen vorliegenden festen mikrobioziden Mittel aus

(i) 0,1 bis 70 Gew.-%, bezogen auf das Gesamtgewicht des Mittels, eines wasserlöslichen Isothiazolonmikrobiozids mit einer Wasserlöslichkeit bei Zimmertemperatur (25°C) von mehr als 1000 ppm, vermischt mit und absorbiert auf

(ii) 99,9 bis 30 Gew.-%, bezogen auf das Gesamtgewicht des Mittels, eines inerten feinteiligen wasserunlöslichen festen Trägermaterials, eingeschlossen in

(b) einer porösen Membran aus einem hydrophoben filmbildenden Material mit einer Dicke von $1{,}27 \times 10^{-5}$m (0,5 mil) bis $25{,}4 \times 10^{-5}$m (10 mils), einem Löslichkeitsparameter von weniger als 12,5 und einer Porengröße, die geringer ist als die effektive Teilchengroße des festen mikrobioziden Mittels.

2. Gegenstand nach Anspruch 1, dadurch gekennzeichnet, daß die Membran aus einem Polyester, Polyfluorolefin, Polyamiden, einem Vinylchloridpolymeren, einem Ethylenpolymeren, einem Propylenpolymeren, einem durch Spinnen verbundenen Polyethylen, einem durch Spinnen verbundenen Polypropylen, einem Polyethylentereppthalat oder aus einem Polycarbonat besteht.

3. Gegenstand nach Anspruch 1 oder 2, dadurch gekennzeichnet, daß das feste Trägermaterial aus einer kieselerdehaltigen Diatomeenerde, einem körnigen Kalziumsilikatmaterial mit hohem Wasserabsorptionsvermögen, Siliziumdioxid, Ton, Aktivkohle, Vermikulit, Maisabfällen, Kieselerde mit hoher Reinheit, Holz und/oder einer Polymermatrix besteht.

4. Gegenstand nach einem der vorhergehenden Ansprüche, dadurch gekennzeichnet, daß das Isothiazolonmikrobiozid mit einer Wasserlöslichkeit bei Zimmertemperatur von mehr als 1000 ppm aus einem mikrobiozid wirksamen Isothiazolon der Formel

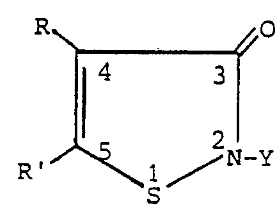

(I)

besteht, worin Y eine nichtsubstituierte oder substituierte $C_1$—$C_{18}$-alkylgruppe, eine nichtsubstituierte oder substituierte $C_2$—$C_{18}$-alkenyl- oder -alkinylgruppe, eine nichtsubstituierte oder substituierte $C_3$—$C_{12}$-cycloalkylgruppe, eine nichtsubstituierte oder substituierte Aralkylgruppe mit 6 bis 10 Kohlenstoffatomen oder eine nichtsubstituierte oder substituierte Arylgruppe mit 6 bis 10 Kohlenstoffatomen ist,

R Wasserstoff, Halogen oder eine $C_1$—$C_4$-alkylgruppe ist,

R′ Wasserstoff, Halogen oder eine $C_1$—$C_4$-alkylgruppe ist oder

R und R′ zusammen mit der C=C-Bindung des Isothiazolonrings unter Bildung eines substituierten oder nichtsubstituierten Benzolrings zusammengenommen werden können, oder einem derartigen

Isothiazolon, stabilisiert mit einem Metallsalz in einer Menge von 1 bis 60 Gew.-%, bezogen auf das Gewicht des 3-Isothiazolons und des Metallsalzes, wobei das Metallsalz der Formel

$$(MX_n)$$

entspricht, worin M Natrium, Kalium, Kalzium, Magnesium, Kupfer, Eisen, Zink, Barium, Mangan, Silber, Kobalt und/oder Nickel ist,

X Chlorid, Bromid, Iodid, Sulfat, Nitrat, Nitrit, Acetat, Chlorat, Perchlorat, Bisulfat, Bicarbonat, Oxalat, Maleat, p-Toluolsulfonat, Carbonat und/oder Phosphat ist, und n eine ganze Zahl ist, für welche das Anion X die Wertigkeit des Kations M absättigt.

5. Gegenstand nach Anspruch 4, dadurch gekennzeichnet, daß das mikrobiozide Mittel 1 bis 35 Gew.-%, bezogen auf das Gesamtgewicht des Mittels, eines Isothiazolons der Formel I, worin Y eine nichtsubstituierte oder substituierte $C_1$—$C_{18}$-alkylgruppe oder eine $C_3$—$C_{12}$-cycloalkylgruppe ist, R Wasserstoff oder Halogen ist, R' Wasserstoff oder Halogen ist, oder R und R' zusammen mit der C=C-Bindung des 3-Isothiazolonrings einen substituierten oder nichtsubstituierten Benzolring bilden, wobei ein derartiges Isothiazolon mit einem oder meheren Metallsalzen stabilisiert ist, und 99 bis 65 Gew.-%, bezogen auf das Gesamtgewicht des Mittels einer kieselerdehaltigen Diatomeenerde, ein körniges Kalziumsilikatmaterial mit hohem Wasserabsorptionsvermögen, eine oder mehrere Kieselerden und/oder ein oder mehrere Tone als festes Trägermaterial aufweist.

6. Gegenstand nach Anspruch 4 oder 5, dadurch gekennzeichnet, daß das mikrobiozide Mittel 2 bis 25 Gew.-%, bezogen auf das Gewicht des Mittels, eines Isothiazolons der Formel I, worin Y Methyl ist, R Wasserstoff ist und R' Chlor ist, wobei ein derartiges Isothiazolon mit $Mg(NO_3)_2$ oder einer Mischung aus $Mg(NO_3)_2$ und $MgCl_2$ stabilisiert ist, und 98 bis 75 Gew.-%, bezogen auf das Gesamtgewicht des Isothiazolons, einer kieselerdehaltigen Diatomeenerde aufweist.

7. Gegenstand nach einem der Ansprüche 4 bis 6, dadurch gekennzeichnet, daß das mikrobiozide Mittel auch ein Isothiazolon mit einer Wasserlöslichkeit bei Zimmertemperatur von weniger als 1000 ppm, insbesondere das Isothiazolon der Formel I mit einer Löslichkeit von ungefähr 500 ppm, wobei Y n-Octyl oder t-Octyl ist und R und R' jeweils Wasserstoff sind, stabilisiert mit $Mg(NO_3)_2$ oder einer Mischung aus $Mg(NO_3)_2$ und $MgCl_2$, wobei das gesamte Isothiazolon 2 bis 25 Gew.-%, bezogen auf das Gesamtgewicht des Mittels und der Kombination aus Isothiazolon mit einer Wasserlöslichkeit bei Zimmertemperatur von mehr als 1000 ppm, ausmacht, und ungefähr 98 bis 75 Gew.-%, bezogen auf das Gesamtgewicht des Mittels, einer kieselerdehaltigen Diatomeenerde aufweist.

8. Gegenstand nach Anspruch 7, dadurch gekennzeichnet, daß die Isothiazolonmischung ein Isothiazolon der Formel I enthält, worin Y Methyl ist, R Wasserstoff ist und R' Chlor ist, sowie ein Isothiazolon der Formel I, worin Y Methyl ist, R Wasserstoff ist und R' Wasserstoff ist.

9. Gegenstand nach einem der vorhergehenden Ansprüche, dadurch gekennzeichnet, daß das Mikrobiozid in dem Mittel in wässriger Lösung vorliegt.

10. Gegenstand nach einem der vorhergehenden Ansprüche, dadurch gekennzeichnet, daß die Porengröße der Membran $15,24 \times 10^{-5}$m oder weniger, insbesondere im Falle des Anspruch 7 vorzugsweise ungefähr $12,7 \times 10^{-5}$m, insbesondere im Falle des Anspruchs 8, beträgt.

11. Verfahren zum Sichermachen einen Isothiazolonmikrobiozids, dadurch gekennzeichnet, daß das Mikrobiozid in einen Gegenstand gemäß einem der vorhergehenden Ansprüche eingebracht wird.

12. Verfahren zur Bekämpfung von lebenden Mikroorganismen in einem wässrigen System, dadurch gekennzeichnet, daß in das wässrige System ein Gegenstand gemäß einem der Ansprüche 1 bis 10 eingebracht wird.

13. Verfahren zur Bewirkung einer verzögerten Freisetzung eines Mikrobiozids in ein wässriges System, dadurch gekennzeichnet, daß ein Gegenstand gemäß einem der Ansprüche 1 bis 10 hergestellt wird, der Gegenstand in das wässrige System eingebracht wird und das wässrige System durch die Membran Diffundieren gelassen wird.

14. Verfahren nach Anspruch 12 oder 13, dadurch gekennzeichnet, daß das wässrige System ein Metallbearbeitungsfluid, der Inhalt eines Wasserkühlturms, eines Toilettenbehälters oder einer Zysterne, eines Swimmingpools oder einer Waschmaschine ist.

**Revendications**

1. Article microbicide comprenant:

(a) une composition microbicide solide en particules comprenant

(i) 0,1 à 70% en poids, par rapport au poids total de ladite composition, d'isothiazolone microbicide soluble dans l'eau ayant une solubilité dans l'eau à la température ordinaire (25°C) supérieure à 1000 ppm mélangée avec et absorbée dans:

(ii) 99,9 à 30% en poids, par rapport au poids total de ladite composition, d'une matière support solide inerte finement divisée insoluble dans l'eau; scellée dans

(b) une membrane poreuse d'une matière formant une pellicule hydrophobe ayant une épaisseur de $1,27 \times 10^{-5}$m (0,5 mil) à $25,4 \times 10^{-5}$m (10 mils), un paramètre de solubilité inférieur à 12,5 et une taille des pores inférieure à la taille effective des particules de la composition microbicide solide.

2. Un article selon la revendication 1, dans lequel la membrane comprend un polyester, une poly(fluoro-oléfine), des polyamides, un polymère de chlorure de vinyle, un polymère d'éthylène, un polymère de propylène, un non-tissé de poly(éthylène), un non-tissé de poly(propylène), un poly(téréphtalate d'éthylène) ou un polycarbonate.

3. Un article selon la revendication 1 ou la revendication 2 dans lequel la matière support solide comprend de la terre de diatomées siliceuse, une matière granulaire en silicate de calcium ayant une forte capacité d'absorption de l'eau, de la silice, de l'argile, du charbon, de la vermiculite, des rafles de maïs, de la silice très pure, du bois et/ou une matrice polymère.

4. Un article selon l'une quelconque des revendications précédentes dans lequel l'isothiazolone microbicide ayant une solubilité dans l'eau à la température ordinaire supérieure à 1000 ppm comprend une isothiazolone à activité microbicide de formule:

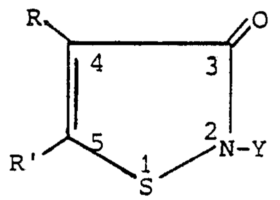

(I)

dans laquelle Y est un groupe alcoyle en $C_1$—$C_8$ non substitué ou substitué, un groupe alcényle ou alcynyle en $C_2$—$C_{18}$ non substitué ou substitué, un groupe cycloalcoyle en $C_3$—$C_{12}$ non substitué ou substitué, un groupe aralcoyle de 6 à 10 atomes de carbone non substitué ou substitué ou un groupe aryle de 6 à 10 atomes de carbone non substitué ou substitué;

R est un hydrogène, un halogène ou un groupe alcoyle en $C_1$—$C_4$,

R' est un hydrogène, un halogène ou un groupe alcoyle en $C_1$—$C_4$, ou

R et R' peuvent être réunis avec la liaison C=C du cycle isothiazolone pour former un cycle benzène substitué ou non substitué;

ou une telle isothiazolone stabilisée avec un sel métallique en une quantité de 1 à 60% en poids par rapport au poids de la 3-isothiazolone et du sel métallique, ledit sel métallique étant représenté par la formule:

$$(MX_n)$$

dans laquelle M est le sodium, le potassium, le calcium, le magnésium, le cuivre, le fer, le zinc, le baryum, le manganèse, l'argent, le cobalt et/ou le nickel;

X est chlorure, bromure, iodure, sulfate, nitrate, nitrite, acétate, chlorate, perchlorate, bisulfate, bicarbonate, oxalate, maléate, p-toluènesulfonate, carbonate et/ou phosphate; et n est un entier pour lequel l'anion X satisfait à la valence du cation M.

5. Un article selon la revendication 4 dans lequel la composition microbicide comprend de 1 à 35% en poids, par rapport au poids total de la composition, d'isothiazolone de formule I dans laquelle Y est un groupe alcoyle en $C_1$—$C_{18}$ non substitué ou substitué ou un groupe cycloalcoyle en $C_3$—$C_{12}$; R est un hydrogène ou un halogène; R' est un hydrogène ou un halogène; ou R et R' sont réunis avec la liaison C=C du cycle 3-isothiazolone pour former un cycle benzène substitué ou non substitué; ladite isothiazolone stabilisée avec un ou plusieurs sels métalliques; et de 99 à 65% en poids, par rapport au poids total de la composition, de terre de diatomées siliceuse, de matière granulaire faite de silicate de calcium ayant une forte capacité d'absorption de l'eau, de silice(s) et/ou d'argile(s) comme matière support solide.

6. Un article selon la revendiction 4 ou 5 dans lequel la composition microbicide comprend de 2 à 25% en poids, par rapport au poids total de la composition, d'isothiazolone de formule I dans laquelle Y est un méthyle, R est un hydrogène et R' est un chlore; ladite isothiazolone stabilisée avec $Mg(NO_3)_2$ ou un mélange de $Mg(NO_3)_2$ et de $MgCl_2$; et de 98 à 75% en poids, par rapport au poids total de ladite isothiazolone, de terre de diatomées siliceuse.

7. Un article selon l'une quelconque des revendications 4 à 6 dans lequel la composition microbicide comprend également de l'isothiazolone ayant une solubilité dans l'eau à la température ordinaire inférieure à 1000 ppm, en particulier l'isothiazolone de formule I ayant une solubilité d'environ 500 ppm et dans laquelle Y est un n-octyl ou un tert-octyle et R et R' sont chacun un hydrogène, stabilisée avec $Mg(NO_3)_2$ ou un mélange de $Mg(NO_3)_2$ et de $MgCl_2$, l'isothiazolone totale constituant de 2 à 25% en poids, par rapport au poids de ladite composition, et la combinaison d'isothiazolones ayant une solubilité dans l'eau à la température ordinaire supérieure à 1000 ppm; et d'environ 98 à 75% en poids, par rapport au poids total de ladite composition, de terre de diatomées siliceuse.

8. Un article selon la revendication 7 dans lequel le mélange d'isothiazolones contient l'isothiazolone de formule I dans laquelle Y est un méthyle, R est un hydrogène et R' est un chlore et l'isothiazolone de formule I dans laquelle Y est un méthyle, R est un hydrogène et R' est un hydrogène.

9. Un article selon l'une quelconque des revendications précédentes dans lequel le microbicice est présent dans la composition en solution aqueuse.

10. Un article comme revendiqué dans l'une quelconque des revendications précédentes dans lequel la taille des pores de la membrane est de $15,24 \times 10^{-5}$m ou moins, en particulier dans le cas de la revendication 7, de préférence d'environ $12,7 \times 10^{-5}$m en particulier dans le cas de la revendication 8.

11. Un procédé pour rendre inoffensive une isothiazolone microbicide qui comprend l'incorporation du microbicide dans un article comme revendiqué dans l'une quelconque des revendications précédentes.

12. Un procédé de lutte contre les micro-organismes vivants dans un système aqueux qui comprend l'incorporation au système aqueux d'un article selon l'une quelconque des revendications 1 à 10.

13. Un procédé pour effectuer le dégagement prolongé d'un microbicide dans un système aqueux qui consiste à préparer un article comme revendiqué dans l'une quelconque des revendications 1 à 10, introduire ledit article dans ledit système aqueux et laisser le système aqueux diffuser à travers la membrane.

14. Un procédé selon la revendication 12 ou 13 dans lequel le système aqueux est un fluide d'usinage des métaux, le contenu d'une tour de refroidissement par l'eau, d'une cuvette ou d'un réservoir de toilettes, d'une piscine ou d'une machine à laver.